# EUROPÄISCHE PATENTSCHRIFT

(11) **EP 2 209 173 B1**
(45) Veröffentlichungstag und Bekanntmachung des Hinweises auf die Patenterteilung: **06.06.2012**
(21) Anmeldenummer: 09000722.0
(22) Anmeldetag: 20.01.2009
(51) Int. Cl.: H01S 3/04

(54) **Lasergehäuse mit einem zu kühlenden Körper**
Laser housing with a body to be cooled
Boîtier laser avec un corps devant être refroidi

(43) Veröffentlichungstag der Anmeldung: 21.07.2010
(73) Patentinhaber: Innovavent GmbH, 37085 Göttingen (DE)
(72) Erfinder: Dr. Schmidt, Henning, 37083 Göttingen (DE)
(74) Vertreter: Katérle, Axel

(56) Entgegenhaltungen:
- EP-A- 0 217 084
- DE-C1- 10 047 020
- US-A- 3 554 275

## Beschreibung

Die vorliegende Erfindung betrifft Lasergehäuse mit einem zu kühlenden Körper und ein Verfahren zum Herstellen einer Kühlung für ein Lasergehäuse.

Während des Betriebs eines Lasers wird ein hoher Anteil der eingebrachten Leistung in Wärme umgewandelt, weshalb die Lasergehäuse, die insbesondere den Resonator enthalten, gekühlt werden müssen. Die Erfindung betrifft insbesondere Festkörperlaser aber auch Gaslaser etc.

Es sind verschiedene Möglichkeiten bekannt, eine Kühlung für ein Lasergehäuse herzustellen, so können beispielsweise Rohre zur Kühlung in den zu kühlenden Körper des Lasergehäuses eingeschrumpft, eingepresst oder eingeklebt werden.

Beim Einschrumpfen der Rohre in den Körper muss entweder der Körper erhitzt und/oder das Zuführrohr entsprechend gekühlt werden, um in eine entsprechende Öffnung in dem Körper eingebracht werden zu können. Nach Erreichen einer Normaltemperatur nehmen der Körper und/oder das Leitungsrohr ihre ursprünglichen Maße wieder an und es entsteht eine Pressverbindung zwischen dem Körper und dem Rohr, wodurch das Rohr mit dem Körper dauerhaft verbunden wird.

Auch das Einpressen der Rohre in den Körper geht mit einem relativ großen Aufwand einher, da die Bohrung in dem Körper und die Außenabmaße des Rohres sehr genau gearbeitet sein müssen, um einen Presssitz mit einer vorbestimmten Presspassung zu ermöglichen. Bei größeren Längen, d.h. je nach dem wie weit das Rohr in den Körper eingebracht werden soll, werden Spezialmaschinen benötigt, die eine hinreichend große Kraft zum Einpressen des Rohres in den Körper erzeugen können.

Die beiden voranstehend beschriebenen Verfahren zum Herstellen einer Kühlung eines Lasergehäuses sind relativ aufwendig und teuer, da für beide Verbindungsverfahren Spezialmaschinen benötigt werden. Zudem können während des Einpressens bzw. Einschrumpfens des Rohres unerwünschte mechanische Spannungen in das Rohr oder den Körper eingebracht werden.

Alternativ zu den bereits beschriebenen Verfahren können die Rohre auch in den zu kühlenden oder zu erwärmenden Körper eingeklebt werden. Bei Klebeverbindungen können sich in der Klebstoffschicht zwischen dem Rohr und dem Körper Luftblasen bilden, die beim Durchleiten eines kalten Fluids zum Kühlen des Körpers Spannungen in der Klebstoffschicht erzeugen und die Verbindung zwischen Rohr und Körper lockern können. Gerade Klebeverbindungen verfügen allgemein über eine geringe Wärmefestigkeit, was bei der Kühlung eines Lasergehäuses und den damit verbundenen Temperaturschwankungen einen Nachteil bedeutet, durch den die Haltbarkeit und Festigkeit einer derartigen Verbindung sinkt. Zudem ist die Wärmeleitfähigkeit einer Klebstoffschicht schwierig zu bestimmen, wodurch nicht gewährleistet werden kann, dass der Körper des Lasergehäuses ausreichend gekühlt wird.

Es ist demgegenüber Aufgabe der vorliegenden Erfindung, ein Lasergehäuse der eingangs bezeichneten Art bereitzustellen, dessen Körper einfach und kostengünstig gekühlt werden kann.

Diese Aufgabe wird durch ein Lasergehäuse mit einem zu kühlenden Körper gelöst, den zumindest ein Kanal durchsetzt, in den ein Rohr einschiebbar ist, wobei zwischen dem Rohr und der Innenwand des Kanals zumindest teilweise eine Rohr-Ummantelung angeordnet ist, die beim Einschieben des Rohrs in den Kanal verformbar ist und einen wärmeleitenden Kontakt zwischen dem Rohr und dem Körper fördert, dadurch gekennzeichnet, dass der wärmeleitende Kontakt zwischen dem Rohr (16) und dem Körper (12) zerstörungsfrei lösbar ist, sodass an dem Rohr (16) und an dem Lasergehäuse (10) keine Schäden entstehen.

Durch die Verwendung einer derartigen Rohr-Ummantelung, die sich während des Einschiebens in den Kanal des zu kühlenden Körpers verformt, kann das Rohr zum Zuführen eines Kühlfluids wärmeschlüssig mit dem Körper des Lasergehäuses verbunden werden, ohne dass teuere Spezialmaschinen oder Spezialkleber benötigt werden. Ferner lässt sich für das Lasergehäuse über ein preisgünstiges und leicht handhabbares Verfahren eine Kühlung herstellen, da sich die Ummantelung des Rohres beim Einschieben so verformt, dass eine Wärmeleitung zwischen dem Rohr und dem Körper durch die verformte Ummantelung gefördert wird. Zudem werden durch dieses Verfahren keinerlei unerwünschte mechanische Spannungen in das Material des Lasergehäuses oder des Rohres eingebracht.

Die verformbare Ummantelung stellt einen flexiblen wärmeleitenden Kontakt zwischen dem Rohr und dem Körper her. Aufgrund dieses flexiblen Kontakts entstehen im Betrieb eines in dem Lasergehäuse installierten Lasers durch die vorhandenen Temperaturunterschiede keine thermischen Spannungen in dem Lasergehäuse und dem Rohr.

Mit einer derartigen verformbaren Rohr-Ummantelung lässt sich eine wärmeleitende Verbindung zwischen dem Rohr und dem zu kühlenden Körper des Lasergehäuses herstellen, die - im Gegensatz zu den bekannten Verfahren - auch wieder zerstörungsfrei lösbar ist, beispielsweise für Wartungsarbeiten oder Umbauten an dem Lasergehäuse.

Gemäß einer bevorzugten Weiterbildung der Erfindung ist die Ummantelung von wenigstens einem Strang aus verformbaren Material gebildet. Es sind hier verschiedene Möglichkeiten zur Bildung der Ummantelung aus wenigstens einem Strang denkbar, z.B. spulenartige Wicklungen zum Aufbringen auf das Rohr oder direkte Umwicklungen des Rohres.

Die Erfindung sieht vor, dass die Ummantelung aus einem Geflecht besteht, insbesondere einer Litze aus Einzeldrähten. Das aus Einzeldrähten oder Einzelsträngen gebildete Geflecht wird zusammen mit dem Rohr in den Kanal im Körper des Lasergehäuses eingeschoben und die Einzeldrähte verformen sich dabei an der Innenwand des Kanals, wodurch ein wärmeübertragender Kontakt zwischen dem Rohr und dem zu kühlenden Körper gefördert wird.

Da sich das für die Ummantelung verwendete Material durch eine hohe Wärmeleitfähigkeit und gute Gleitfähigkeit auszeichnen sollte, besteht die Ummantelung gemäß einer bevorzugten Ausführungsform aus einem plastisch verformbaren Material, wie Kupfer, insbesondere verzinntem Kupfer. Neben dem hier beschriebenen Kupfer sind auch weitere Materialien, die sich durch ähnliche Eigenschaften wie das Kupfer auszeichnen, für die Ummantelung denkbar. Hier seien Messing und Silber, da Silber den besten Wärmeleiter unter den Metallen darstellt, sowie Legierungen mit einem hohen Kupfer- oder Silberanteil genannt. Die Materialien für die Ummantelung sind jedoch nicht auf Metalle beschränkt.

Vorzugsweise durchsetzt der Kanal den Körper im Wesentlichen U-förmig. Durch den U-förmigen Verlauf des Kanals wird die Wegstrecke des Kanals in dem Körper des Lasergehäuses im Vergleich zu einem geradlinigen Verlauf verlängert, wodurch sich der Weg des den Körper durchströmenden Kühlfluids verlängert und somit der Wärmeübertrag von dem Lasergehäuse auf das Kühlfluid maximiert wird.

Der zu kühlende Körper des Lasergehäuses besteht typischerweise aus Aluminium.

Die vorliegende Erfindung betrifft ferner ein Verfahren zum Herstellen einer Kühlung für ein Lasergehäuse, welches einen zu kühlenden Körper aufweist, den zumindest ein Kanal durchsetzt, in den ein Rohr einschiebbar ist, wobei zwischen dem Rohr und der Innenwand des Kanals eine verformbare Ummantelung angeordnet wird, die sich beim Einschieben des Rohrs in den Kanal so verformt, dass eine Wärmeleitung zwischen dem Rohr und dem Körper durch die verformte Ummantelung gefördert ist, dadurch gekennzeichnet, dass der wärmeleitende Kontakt zwischen dem Rohr (16) und dem Körper (12) zerstörungsfrei lösbar ist, sodass an dem Rohr (16) und an dem Lasergehäuse (10) keine Schäden entstehen.

Die Erfindung wird im Folgenden beispielhaft anhand der beiliegenden Figuren erläutert. Es stellen dar:
- Figur 1: eine schematische Ansicht eines Lasergehäuses und eines Rohres mit einer Ummantelung;
- Figur 2: eine vergrößerte, aufgebrochene Ansicht des Lasergehäuses mit dem eingeschobenen Rohr; und
- Figur 3: eine perspektivische Ansicht des Lasergehäuses.

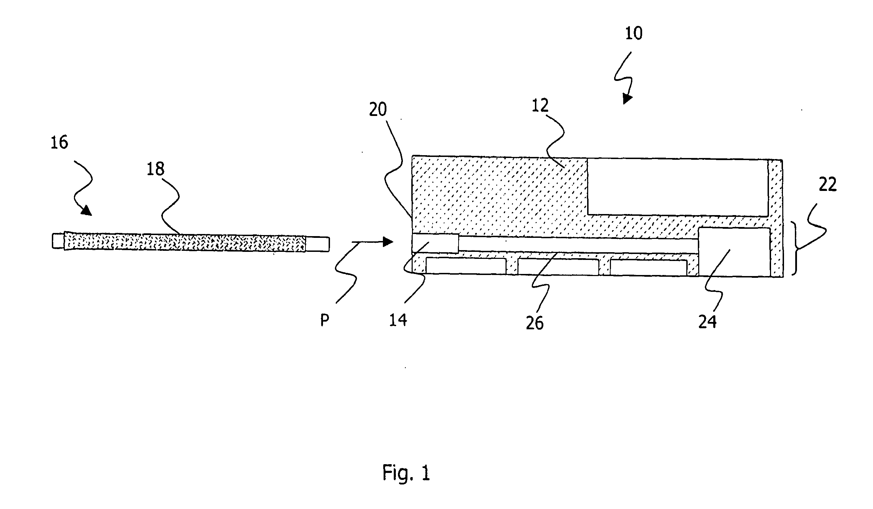

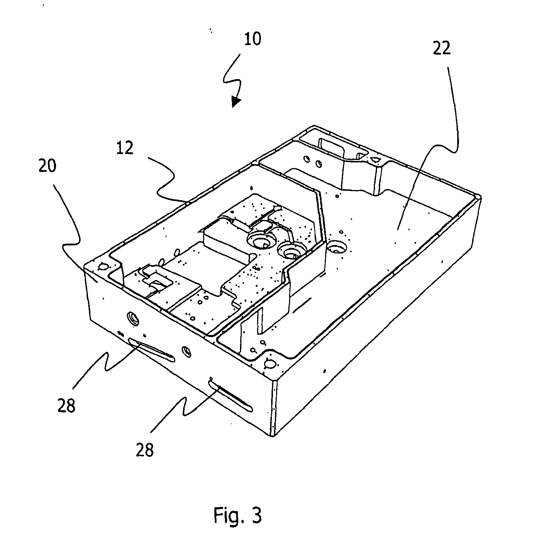

Figur 1 zeigt eine schematische Schnittansicht eines Lasergehäuse 10 mit einem zu kühlenden Körper 12. Der Körper 12 ist mit einem Kanal 14 durchsetzt, in den ein Rohr 16 eingeschoben wird. An dem Rohr 16 erkennt man eine verformbare Ummantelung 18, durch die ein wärmeleitender Kontakt zwischen dem Rohr 16 und dem Körper 12 gefördert wird. Zur weiteren Veranschaulichung zeigt Figur 3 eine perspektivische Ansicht des Lasergehäuses 10, das im weiteren Verlauf dieser Beschreibung detailliert beschrieben wird.

Der Kanal 14 verläuft, wie in Figur 1 ersichtlich, von einer Wand 20 des Lasergehäuses 10 durch einen Boden 22 bis zu einer Ausnehmung 24 in dem Boden 22 des Lasergehäuses 10. Der Kanal 14 weist zu Beginn einen vergrößerten Durchmesser auf, um ein Einschieben des Rohres 16 mit der Ummantelung 18 zu erleichtern und/oder hier nicht gezeigte Anschlussstücke an den Rohr 16 mit in dem Lasergehäuse 10 aufzunehmen.

Ferner erkennt man in Figur 1 den Pfeil P, in dessen Pfeilrichtung das Rohr 16 in den Kanal 14 in dem Körper 12 eingeschoben wird.

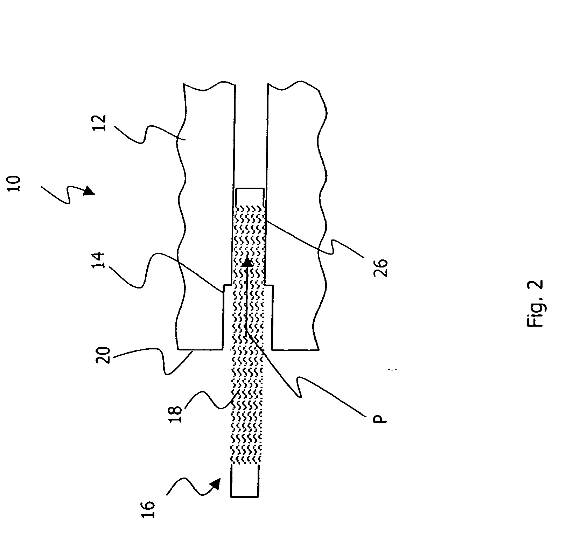

Figur 2 zeigt eine vergrößerte, aufgebrochene Ansicht des Lasergehäuses 10 mit dem weiter in Pfeilrichtung des Pfeils P in den Körper 12 eingeschobenen Rohr 16. Die Ummantelung 18 wird während des Einschiebens an der Innenwand 26 des Kanals 14 verformt. Aufgrund der Verformung der Ummantelung 18 an der Innenwand 26 des Kanals 14 während des Einschiebens des Rohres 16 wird ein wärmeleitender Kontakt zwischen dem Rohr 16 und dem Körper 12 hergestellt und das Rohr 16 im Kanal 14 des zu kühlenden Körpers 12 aufgenommen. Dieser wärmeleitender Kontakt macht einen verbesserten Wärmeübergang von dem Gehäuse 10 über das Rohr 16 auf ein durch den Kanal 14 strömendes Kühlfluid möglich.

Wie man weiter aus Figur 2 erkennt, steht das Rohr 16 nur über die Ummantelung 16 mit dem Lasergehäuse 10 in Kontakt. Die im Betrieb eines Lasers in dem Lasergehäuse 10 und dem Rohr 16 aufgrund von Temperaturunterschieden zwischen dem Lasergehäuse 10 und dem von einem Kühlfluid durchströmten Rohr 16 entstehenden thermischen Spannungen wirken sich dementsprechend nicht direkt auf den Körper 12 bzw. das Rohr 16 aus, sondern können bis zu einem gewissen Grad durch die Ummantelung 18 kompensiert werden. Ferner entstehen durch den fehlenden direkten Kontakt zwischen dem Rohr 16 und der Innenwand 26 des Kanals 14 während des Einschiebens keine mechanische Spannungen, da während des Einschiebens nur die Ummantelung 18 an der Innenwand 26 des Kanals 14 verformt wird.

Figur 3 zeigt eine perspektivische Ansicht des Lasergehäuses 10. Man erkennt in Figur 3 zwei Öffnungen 28 in der Wand 20 des Lasergehäuses 10. Die Öffnungen 28 sind hier in Form einer Langlochs ausgebildet. In eine der beiden Öffnungen 28 wird das Kühlfluid zur Kühlung des Körpers 12 in einen in Figur 3 nicht gezeigten Kanal eingeleitet und entsprechend durch die jeweils andere Öffnung 28 wieder ausgeleitet. Der hier nicht gezeigte Kanal 14 kann beispielsweise U-förmig durch den Boden 22 des Lasergehäuses 10 verlaufen. In dem in Fig. 3 nicht gezeigten Kanal mit der Öffnung 28 sind U-förmige Rohre aufgenommen, mit denen das Kühlfluid durch den Boden 22 des Körpers 12 geleitet werden kann, wodurch mögliche chemische Reaktionen zwischen dem Kühlfluid und dem für den Körper 12 gewählten Material, bevorzugt Aluminium, vermieden werden können.

Im Folgenden soll mit Bezug auf die Figuren 1 und 2 die Herstellung einer Kühlung für das Lasergehäuse 10 mit dem kühlenden Körper 12 beschrieben werden. Wie bereits erwähnt, wird der Körper 12 von zumindest dem Kanal 14 durchsetzt.

An dem Rohr 16 wird eine von wenigstens einem Strang gebildete Ummantelung 18 angebracht, beispielsweise ein Geflecht aus einer Mehrzahl von Strängen oder eine spulenartige Wickelung aus einem Strang.

Das Rohr 16 mit der Ummantelung 18 wird nun in Pfeilrichtung des Pfeils P in Figur 1 in den Kanal 14 eingeschoben.

In Figur 2 wurde das Rohr 12 bereits weiter in Pfeilrichtung des Pfeils P in den Kanal 14 des Lasergehäuses 10 eingeschoben. Die Ummantelung 18 wird an der Innenwand 26 während des Einschiebens verformt, wodurch eine Wärmeleitung zwischen dem Rohr 16 und dem Lasergehäuse 14 gefördert wird.

Wie man aus Figur 2 erkennt, steht das Rohr 16 nur über die Ummantelung 18 mit dem Körper 12 in Kontakt. Somit entstehen während der Herstellung bzw. Einschiebens keinerlei mechanische Spannungen in dem Rohr 16 oder dem Körper 12, da das Rohr 16 und der Körper 12 ohne direkten Kontakt unter der Verformung der Ummantelung 18 miteinander verbunden werden. Das Rohr 16 wird in etwa bis zu der Ausnehmung 24 in dem Lasergehäuse 10 eingeschoben, womit der größte Teil des Körpers 12 gekühlt werden kann (Fig.1).

Aufgrund des fehlenden direkten Kontakts zwischen dem Rohr 16 und dem Kanal 14 in dem Körper 12 kann die Verbindung zwischen Rohr 16 und Körper 12 wieder zerstörungsfrei gelöst werden, ohne das an dem Rohr 16 oder dem Lasergehäuse 10 Schäden entstehen.

## Patentansprüche

1. Lasergehäuse (10) mit einem zu kühlenden Körper (12), den zumindest ein Kanal (14) durchsetzt, in den ein Rohr (16) einschiebbar ist, wobei zwischen dem Rohr (16) und der Innenwand (26) des Kanals (14) zumindest teilweise eine aus einem Geflecht bestehende Rohr-Ummantelung (18) angeordnet ist, die beim Einschieben des Rohrs (16) in den Kanal (14) verformbar ist und einen wärmeleitenden Kontakt zwischen dem Rohr (16) und dem Körper (12) fördert,
**dadurch gekennzeichnet, dass**
der wärmeleitende Kontakt zwischen dem Rohr (16) und dem Körper (12) zerstörungsfrei lösbar ist, sodass an dem Rohr (16) und an dem Lasergehäuse (10) keine Schäden entstehen.

2. Lasergehäuse (10) nach Anspruch 1, **dadurch gekennzeichnet, dass** das Geflecht eine Utze aus Einzeldrähten ist.

3. Lasergehäuse (10) nach einem der vorhergehenden Ansprüche, **dadurch gekennzeichnet, dass** die Ummantelung (18) aus einem verformbaren Material besteht, insbesondere einem Metall, wie Kupfer, insbesondere verzinntem Kupfer.

4. Lasergehäuse (10) nach einem der vorhergehenden Ansprüche, **dadurch gekennzeichnet, dass** der Kanal (14) den Körper (12) im Wesentlichen U-förmig durchsetzt.

5. Lasergehäuse (10) nach einem der vorhergehenden Ansprüche, **dadurch gekennzeichnet, dass** der Körper (12) aus Aluminium besteht

6. Verfahren zum Herstellen einer Kühlung für ein Lasergehäuse (10), welches einen zu kühlenden Körper (12) aufweist, den zumindest ein Kanal (14) durchsetzt, in den ein Rohr (16) einschiebbar ist, wobei zwischen dem Rohr (16) und der Innenwand (26) des Kanals (14) eine verformbare, aus einem Geflecht bestehende, Ummantelung (18) angeordnet wird, die sich beim Einschieben des Rohrs (16) in den Kanal (14) so verformt, dass eine Wärmeleitung zwischen dem Rohr (16) und dem Körper (12) durch die verformte Ummantelung (18) gefördert ist,
**dadurch gekennzeichnet, dass**
der wärmeleitende Kontakt zwischen dem Rohr (16) und dem Körper (12) zerstörungsfrei lösbar ist, sodass an dem Rohr (16) und an dem Lasergehäuse (10) keine Schäden entstehen.

## Claims

1. Laser housing (10) having a body to be cooled (12), through which at least one conduit (14) extends, and a pipe (16) is insertable into the conduit (14), wherein between the pipe (16) and the inner wall (26) of the conduit (14) at least partly a pipe covering (18) consisting of a network is arranged, which is deformable by inserting the pipe (16) into the conduit (14) and which enhances a heat conductive contact between the pipe (16) and the body (12), **characterized in that** the heat conductive contact between the pipe (16) and the body (12) is non-destructively disengageable such that no damages at the pipe (16) and the laser housing (12) occur.

2. Laser housing (10) according to claim 1, **characterized in that** the network is a braid of single wires.

3. Laser housing (10) according to one of the preceding claims, **characterized in that** the covering (18) consists of deformable material, in particular metal such as tinned copper.

4. Laser housing (10) according to one of the preceding claims, **characterized in that** the conduit (14) extends in the body (12) substantially U-shaped.

5. Laser housing (10) according to one of the preceding claims, **characterized in that** the body (12) consists of aluminium.

6. Method of providing a cooling for a laser housing (10), which comprises a body (12) to be cooled, through which at least one conduit (14) extends, a pipe (16) is insertable into the conduit (14), wherein between the pipe (16) and the inner wall (26) of the conduit (14) a deformable covering (18) consisting of a network is arranged, which covering (18) deforms during insertion of the pipe (16) into the conduit (14) such that the heat conduction between the pipe (16) and the body (12) is enhanced through the deformed covering (18), **characterized in that** the heat conductive contact between the pipe (16) and the body (12) is non-destructive disengageable such that no damages occur at the pipe (16) and the laser housing (10).

## Revendications

1. Boitier de laser (10) comprenant un corps (12) à refroidir traversé par au moins un canal (14) dans lequel un tube (16) peut être inséré, entre ledit tube (16) et la paroi intérieure (26) du canal (14) étant agencée, au moins en partie, une enveloppe de gainage (18) de tube constituée par un treillis, qui est déformable lors de l'insertion du tube (16) dans le canal (14) et favorise un contact thermoconducteur entre le tube (16) et le corps (12),
**caractérisé en ce que**
le contact thermoconducteur entre le tube (16) et le corps (12) peut être interrompu de manière non destructive, de sorte qu'il ne se produit pas de dommages, ni sur le tube (16), ni sur le boitier de laser (10).

2. Boitier de laser (10) selon la revendication 1, **caractérisé en ce que** le treillis est une tresse de fils individuels.

3. Boitier de laser (10) selon l'une des revendications précédentes, **caractérisé en ce que** l'enveloppe de gainage (18) est réalisée en un matériau déformable, notamment un métal tel que du cuivre, plus particulièrement du cuivre étamé.

4. Boitier de laser (10) selon l'une des revendications précédentes, **caractérisé en ce que** le canal (14) traverse le corps (12) sensiblement selon une forme en U.

5. Boitier de laser (10) selon l'une des revendications précédentes, **caractérisé en ce que** le corps (12) est réalisé en aluminium.

6. Procédé de mise en oeuvre d'un refroidissement pour un boitier de laser (10) comprenant un corps (12) à refroidir traversé par au moins un canal (14) dans lequel un tube (16) peut être inséré, entre ledit tube (16) et la paroi intérieure (26) du canal (14) étant agencé une enveloppe de gainage (18) de tube déformable, constituée par un treillis, qui se déforme lors de l'insertion du tube (16) dans le canal (14) de manière telle qu'une conduction thermique soit favorisée entre le tube (16) et le corps (12) par l'enveloppe de gainage (18) déformée,
**caractérisé en ce que**
le contact thermoconducteur entre le tube (16) et le corps (12) peut être interrompu de manière non destructive, de sorte qu'il ne se produit pas de dommages, ni sur le tube (16), ni sur le boitier de laser (10).
